# EUROPEAN PATENT APPLICATION

(11) **EP 3 360 904 A1**
(43) Date of publication of application: **15.08.2018**
(21) Application number: 17155645.9
(22) Date of filing: 10.02.2017
(51) Int. Cl.: C08F 6/00, C08G 61/08

(54) **PROCESS FOR PREPARING POLYALKENAMERS FOR PACKAGING APPLICATIONS**

(71) Applicant: Evonik Degussa GmbH, 45128 Essen (DE)
(72) Inventor: WURSCHE, Roland, 48249 Dülmen (DE); SCHWAGER, Florian, 48151 Münster (DE); ADAM, Dieter, 59494 Soest (DE); MICHLBAUER, Franz, 84558 Kirchweidach (DE)

(57) **Abstract**

The present invention relates to a process for producing cycloalkenamer-containing compositions, comprising the steps of:
a) converting at least one cycloalkene by ring-opening metathetic polymerization to obtain a polyalkenamer-containing product mixture, and
b) working up the product mixture to remove monomers and oligomers of the cycloalkenes to obtain the polyalkenamer-containing composition by extraction with CO₂,
wherein the extraction comprises at least two stages:
b1) an extraction with supercritical CO₂, then
b2) an extraction with gaseous CO₂ and then
b3) an extraction with supercritical CO₂.

## Description

The present invention relates to a process for producing polyalkenamer-containing compositions.

To increase the lifetime of packaged foods, it is possible to employ the principle of the active oxygen barrier. This means that, as well as the customary passive barrier layers, for example nylon-6, polyethylene terephthalate or ethylene-vinyl alcohol copolymer, additional "active" components which bind oxygen by chemical reaction (oxidation) are used in the packaging. This may firstly relate to oxygen present within a packaging (residual oxygen in modified atmosphere packaging (MAP) packaging) and secondly to oxygen which diffuses into the packaging through the passive barrier over the course of time. This "active" component may be present in different regions of the packaging; for example, it may be part of a separate layer of a multilayer packaging system or else introduced directly into the abovementioned passive barrier layer. The chemical reaction with the additional "active" component reduces any chemical reaction of the oxygen with, for example, ingredients of the packaged foods (fats, vitamins, etc.) or else aerobic bacterial and fungal growth, such that the quality of the foods is conserved for longer. This in turn give rise to advantages, since less food is spoiled prior to sale or prior to consumption and so resources are conserved in various aspects. Furthermore, a lower level of preservatives, if any, needs to be added to foods. Typically, the active component contains a readily oxidizable organic compound, and additionally further constituents such as metal salts as catalysts or else photoinitiators. Oxidizable compounds proposed for this purpose are, for example, polyoctenamers; see, for example, EP2017308A1, WO9407944A1, WO9407379A1 and WO9806779A1.

The preparation of polyoctenamer is known from the literature (see, for example, US2013/172635), and it follows the principle of what is called metathesis polymerization. It is also known that polyoctenamer, like other metathesis polymers too, starting with the monomer, contains a proportion of low molecular weight cyclic compounds (oligomers) (see A. Dräxler in Handbook of Elastomers, 2nd edition, 697-722, 2001). These molecules are relatively mobile up to a particular molecular weight, i.e. are converted to the gas phase and lead to a disadvantageous odour of packaging materials because of their odour activity. Moreover, they are fat-soluble because of their polarity, and so it is conceivable that they will pass over into the packaged material. Because of these properties, the polymers prepared by metathesis have limited possible use in packaging applications, meaning that important fields of application even remain closed, specifically for the purpose of utilization of polyoctenamers as a constituent of a packaging containing an "active oxygen barrier". Extraction of low molecular weight cyclic compounds from polyoctenamers with acetone or isopropanol has been described in the literature; see A. Dräxler in Handbook of Elastomers, 2nd edition, 697-722, 2001. EP2017308A1 also describes corresponding extractions with various solvents.

The ring-opening metathesis polymerization (ROMP) of cycloalkenes is known per se (Olefin Metathesis and Metathesis Polymerization, K. J. Irvin, J. C. Mol, Academic Press 1997; Handbook of Metathesis, Vol. 1-3, R. H. Grubbs, Wiley-VCH 2003). This reaction is catalysed by a number of transition metals or compounds thereof, often with use of a cocatalyst which, together with the transition metal or the added transition metal compound, forms the catalytically active transition metal species in a reaction. Suitable cocatalysts are particularly aluminium organyls and tin organyls.

Other catalysts are based on defined transition metal complexes. The most well-known compounds include complexes based on ruthenium (Weskamp, T. Kohl, F. J. Herrmann, W. A. J. Organomet. Chem. 1999, 582, 362-365; Weskamp, T. Kohl, F. J. Hieringer, W., Gleich, D. Hermann, W. A. Angew. Chem. Int. Ed. 1999, 38, 2416-2419; Nguyen, S. T., Johnson, L. W., Grubbs, R. H., Ziller, J. W., J. Am. Chem. Soc. 1992, 114, 3974-3975; Bielawski, C. W., Grubbs, R. H., Angew. Chem. Int. Ed. 2000, 39, 2903-2906). However, a disadvantage here is their high cost, and particularly the difficulty of separation thereof from the reaction product. Residues of ruthenium lead to an often unacceptable colour of the product. In these cases, the polymer has to be purified by complex methods, for example reprecipitation, which is a barrier to economic preparation.

The properties of the resulting polymer can be adjusted via parameters such as temperature, concentration of monomer, catalyst concentration and reaction time. The molecular weight can be controlled via the addition of chain transfer agents, the task of which is to terminate the growing chain. Since the process is a statistical process, the molecular weight, in a first approximation, is in a reciprocal relationship to the concentration of chain transfer agent. Broadening of the molecular weight distribution as a consequence of secondary metathesis (chain transfer or "back-biting") is not being considered here. Thus, it is possible through addition of chain transfer agents to affect the molecular weight, but not the breadth of the molecular weight distribution. Later on in the reaction, there is secondary metathesis, in which what adds onto the active end of a growing chain is not a further monomer molecule but an existing polymer chain. The result is chain transfer, which results in an increase in the polydispersity (expressed as (M_{w}/Mₙ)-1 or M_{w}/Mₙ). A further observation with advancing reaction is the shift in the cis/trans ratio in favour of the trans configuration. This is an effect which can likewise be attributed to the secondary metathesis. In order to establish particular properties in the polymer, what is thus required is exact control of a wide variety of different process parameters.

The polymerization of cycloalkenes by ROMP constitutes an important process for preparing polyalkenamers. One example of this is the polymerization of cyclooctene to give polyoctenamer (for example VESTENAMER® from Evonik Industries, DE). In general, the polyalkenamer is used in solid form; for some applications, however, it is necessary for the polymer to be in a liquid state at room temperature. An important application for polyalkenamers is use in packaging, for example in packaging films, in order to improve the barrier properties of the film, especially with respect to oxygen, but also other substances, for example CO₂ or water. More particularly, the barrier properties are improved by the chemical binding of oxygen by the polyalkenamers (active barrier effect). In this case, generally a transition metal compound which accelerates the reaction of the polyalkenamer with oxygen is added to the polyalkenamer (EP2017308A1).

The polymerization of the cycloalkenes leaves monomers and oligomers of the monomer in the product mixture obtained. Studies have shown that these compounds in particular have elevated odour activity. Several authors report that the odour activity is correlated to the molar mass among other properties. Odorous substances of this kind (odour-active organic compounds, OVOCs), according to the source, have molar masses of not more than 350 g/mol or less than 300 g/mol, in order to be sufficiently volatile and perceptible as an odour (M. Schlegelmilch, Geruchsmanagement: Methoden zur Bewertung and Verminderung von Geruchsemissionen [Odour Management: Methods of Assessing and Reducing Odour Emissions], Hamburger Berichte 32 from the Hamburg-Harburg University of Technology, Abfall aktuell Publishers 2009, ISBN 978-3-9810064-9-0; M. Schön, R. Hübner, Geruch - Messung and Beseitigung [Odour - Measurement and Elimination], Vogel Publishers Würzburg, 1st edition 1996, ISBN 3-8023-1561-8; Umweltbundesamt, Innenraumlufthygiene-Kommission des Umweltbundesamtes, Leitfaden für die Innenraumhygiene in Schulgebäuden [German Environment Agency, Indoor Air Hygiene Commission of the German Environment Agency, Guidelines for Indoor Air Hygiene in School Buildings], page 47, 2008; G. Scharfenberger, Papier + Kunststoff-Verarbeiter 10, 1990).

The use of supercritical gases for extraction of solids has long been known (Munshi et al. in Current Science 97(1), 2009, 63-72; The Pharma Innovation Journal 2014, 3(5) 19-24). The extraction of low molecular weight constituents from polymers has also been described (US4306058; Journal of Chromatography A, 855 (1999) 715-721; Journal of Applied Polymer Science, Vol. 101, 4487-4492 (2006); Bartle et al. in Anal. Chem. 1991, 63, 2371-2377). It is also possible here to use cosolvents. Because of the known disadvantages associated with the use of organic solvents and the fact that the gases are combustible or can be separated again from the end product only with considerable difficulty, carbon dioxide is a preferred extractant in the prior art.

However, it has been found that the customary extraction with supercritical carbon dioxide has an adverse effect on the material consistency of the extracted product, since it partially sinters or is at least partially compressed in the course of extraction with standard process parameters. This has the effect of reduced permeability, which can lead to edge flows and channel formation. This results in reduced extraction performance. In addition, the extraction material, after extraction, may no longer be in the original powder or granule form.

The problem addressed was thus that of providing a process for producing polyalkenamer-containing compositions which results in products having reduced odour activity. Compared to the methods of the prior art, polymers having a suitable reduced monomer and oligomer content were to be obtained. The monomers and oligomers were to be removed by the gentle CO₂ extraction, but without causing sintering or compression of the polyalkenamers. The polyalkenamer compounds were to have at least an equal active barrier effect (for example equal effect in the chemical binding of oxygen). This was to assure use in the food sector.

The object was achieved by conducting the CO₂ extraction in at least three stages.

The object was accordingly achieved by a process for producing a polyalkenamer-containing composition, comprising the steps of:
a) converting at least one cycloalkene by ring-opening metathetic polymerization to obtain a polyalkenamer-containing product mixture, and
b) working up the product mixture to remove monomers and oligomers of the cycloalkenes to obtain the polyalkenamer-containing composition by extraction with CO₂ (CO₂ extraction),
   wherein the extraction comprises at least the consecutive stages:
   b1) an extraction with supercritical CO₂, then
   b2) an extraction with gaseous CO₂, and then
   b3) an extraction with supercritical CO₂.

In this way, monomers and oligomers are extracted from the product mixture by means of CO₂ as extractant. The three-stage process according to the invention prevents sintering or compression of the extraction material. Moreover, the phase change from supercritical to gaseous effects that CO₂ in the polyalkenamer-containing composition expands. In consequence the composition is cracked so that monomers and oligomers can be extracted more easily.

The optimal temperature and pressure conditions in stages b1 and b3 for removal of monomers and oligomers are determined by the person skilled in the art in accordance with the oligomer distribution by means of simple preliminary experiments.

Before extraction step b1 or extraction step b3 an optional step b0 may be performed. Step b0 is an extraction with liquid CO₂. The conditions of the extraction step b0 are preferably adjusted such that no supercritical CO₂ is present. Thus, sintering and compression can be avoided. In this embodiment, the extraction is consequently commenced with liquid carbon dioxide. For this purpose, liquid carbon dioxide first has to be passed at least once through the extraction apparatus before it is possible to work under supercritical conditions. Thereafter, the conditions are adjusted such that supercritical CO₂ is present. It is preferred to conduct the CO₂ extraction in at least five stages, namely subsequently b0, b1, b2, b0 and b3.

Preferably, for step b0, the CO₂ is first brought, converted under subcritical conditions (pressure below 73.8 bar or temperature below 31°C; in case of a pressure below 73.8 bar, the temperature is preferable below 40 °C for preventing sintering) to the liquid state of matter, for example by means of a heat exchanger, a pump or a compressor. The liquid CO₂ preferably has a temperature in the range from more than 0°C to 99°C and a pressure in the range from 10 bar to 1000 bar (pressure and temperature are matched to one another here such that the CO₂ is in liquid form); more preferably the temperature is in the range from more than 0 °C to 40 °C for preventing sintering. Accordingly, the conditions of stage b0 can be adjusted such that either the temperature or the pressure is already above the critical point. However, it is preferable that at least the temperature is kept below the critical temperature of 31°C.

In this respect, the pressure or temperature in stage b0 is set as follows:
i) pressure and temperature are below the critical value for CO₂ or
ii) the pressure is above and the temperature is below the critical value for CO₂ or
iii) the pressure is below and the temperature is above the critical value for CO₂ whereby it is preferred that the temperature does not exceed 40 °C for preventing sintering.

It is preferable here to choose variant ii or iii, since one parameter (pressure or temperature) has already been established for the extraction in step b1 and there is no need for readjustment. Variant ii is particularly preferred, since it is less complex in apparatus terms and less time-consuming to raise the temperature and not the pressure to establish the critical conditions. In the event of a pressure increase, heat of compression additionally arises; this heat additionally has to be removed.

The supercritical gas is subsequently brought under the supercritical conditions, for example, by means of a heat exchanger, a pump or a compressor (stages b1 and b3). For this purpose, the CO₂ preferably has a temperature in the range from 31°C to 99°C and a pressure in the range from 74 bar to 1000 bar. Preference is given to a temperature in the range of 40°C to 90°C and a pressure in the range from 100 bar to 500 bar. Particular preference is given to a temperature in the range of 40°C to 70°C and a pressure in the range from 200 bar to 500 bar; even more preferred are temperatures in the range of 40°C to 50°C and pressures in the range from 250 bar to 500 bar. The higher the pressure, the better the extraction outcome should generally be. The pressure can be limited by the extraction apparatus used.

The supercritical carbon dioxide is passed into an extraction vessel in which the polyalkenamer-containing product mixture is present. Preferably, the supercritical carbon dioxide is passed continuously through the extraction material.

In the process according to the invention, the relative mass throughput (called S/F = solvent/feed ratio hereinafter) may be between 10 kg up to 500 kg of CO₂ per kg of polyalkenamer-containing product mixture. Ideally, the S/F values are between 25 kg and 250 kg of CO₂ per kg of polyalkenamer-containing product mixture. At an S/F value of below 10 kg per kg of polyalkenamer-containing product mixture, no significant depletion of the monomers and oligomers is observed.

After extraction step b1 the supercritical CO₂ is subsequently brought into gaseous state, for example, by means of a heat exchanger, a pump or a compressor. For this purpose, the CO₂ preferably has a temperature in the range from 0°C to 99°C, preferably 0°C to 40°C, and a pressure in the range from 0 bar to 73 bar, preferably 1 bar to 73 bar. Preference is given to a temperature in the range of 0°C to 40°C and a pressure in the range from 0 bar to 5 bar, preferably 0 bar to 1 bar, more preferably 0 bar. Pressure and temperature are adjusted with respect to one another such that the CO₂ remains in gaseous form but neither supercritical nor liquid or solid.

The pressure figures given above are based on the partial pressure of CO₂ in the system. The system may contain further gaseous constituents.

In this respect, the pressure or temperature in stage b2 is set as follows:
i) pressure and temperature are below the critical value for CO₂ or
ii) the pressure is below and the temperature is above the critical value for CO₂, whereby the temperature preferably does not exceed 40 °C.

It is preferable here to choose variant ii, since one parameter (pressure or temperature) has already been established for the extraction in step b3 and there is no need for readjustment.

In a preferred embodiment of the invention step b2 is kept for at least 30 minutes, more preferably for at least 60 minutes.

The extraction according to step b3 is appropriately followed by a separation of the CO₂ extractant from the extracted material (monomers and oligomers). This can be accomplished by a process familiar to the person skilled in the art (process I; cf., for example, EP0154258 A2). For example, this can be effected by means of a separator, in such a way that the CO₂ extract is subjected to temperature-pressure conditions under which the CO₂ encompassed by the extract is converted to the gaseous state and the phase comprising extracted monomers and oligomers is present in the liquid state. Variation of the pressure and/or temperature conditions then also results in variation of the solution properties of the gas, and the previously dissolved substances are then, for example, separated out from the gas in a separation vessel. The gaseous CO₂ can then be converted back to the liquid state, transferred into a reservoir vessel and then recycled into the extraction circuit in the supercritical state (for example by means of a pump). The CO₂ can be purified by means of adsorbents which may be in gaseous, liquid or supercritical form. Suitable adsorbents are, for example, selected from activated carbon, aluminium oxide, silicon oxide or mixtures, the mixtures including, for example, aluminosilicates such as zeolites.

Preferably, the extract-laden CO₂ is decompressed to a pressure below the critical pressure (73.8 bar). This cools the gas down and it is then in the form of a wet vapour. An extract-rich liquefied gas phase and a virtually extract-free gas phase are formed, the ratio being dependent on the starting pressure or temperature. For separation, the liquid carbon dioxide is evaporated, preferably continuously, and then brought to the separation temperature in an isobaric manner. For this purpose, preferred temperatures are at least 1 K-50 K above the boiling point at the respective prevailing separation pressure. Particular preference is given to temperatures of 5 K-40 K and very particular preference to temperatures of 10-20 K above the boiling point.

After the separation, regenerated gas can be liquefied at the pressure-dependent concentration temperature and fed back to the process.

Alternatively, the process according to the invention and hence also the separation can be conducted under critical CO₂ conditions, where an adsorbent takes up or binds the extracted material (monomers and oligomers) (process II). It is preferable here to maintain the pressure with respect to step b3 and to reduce (still critical temperature) or maintain the temperature (isobaric conditions), whereby maintaining the temperature is preferred. Suitable adsorbents are, for example, selected from activated carbon, aluminium oxide, silicon oxide or mixtures, the mixtures including, for example, aluminosilicates such as zeolites. Activated carbon is a preferred adsorbent. It is possible here to effect the polyalkenamer-containing product mixture with the adsorption material chosen in each case, for example, by homogeneous or heterogeneous mixing, by layered introduction of the adsorption material into the polyalkenamer-containing product mixture, or by downstream connection of the adsorption material. It is preferable when the adsorbent is introduced into the bed in layers, or else when it is connected downstream of the bed to be extracted.

It has been found to be particularly advantageous when the separation is conducted by process II, especially under isobaric conditions. Particularly at relatively high S/F values (> 50), process II is distinctly superior to process I (extraction by means of a separator). The advantages resulting from significantly lower energy consumption and lower capital costs clearly outweigh the additional costs for the adsorption material. The S/F value for process II is preferably set to 50-400 kg of CO₂ per kg of polyalkenamer-containing product mixture. More preferably to 50-200 kg of CO₂ per kg of polyalkenamer-containing product mixture.

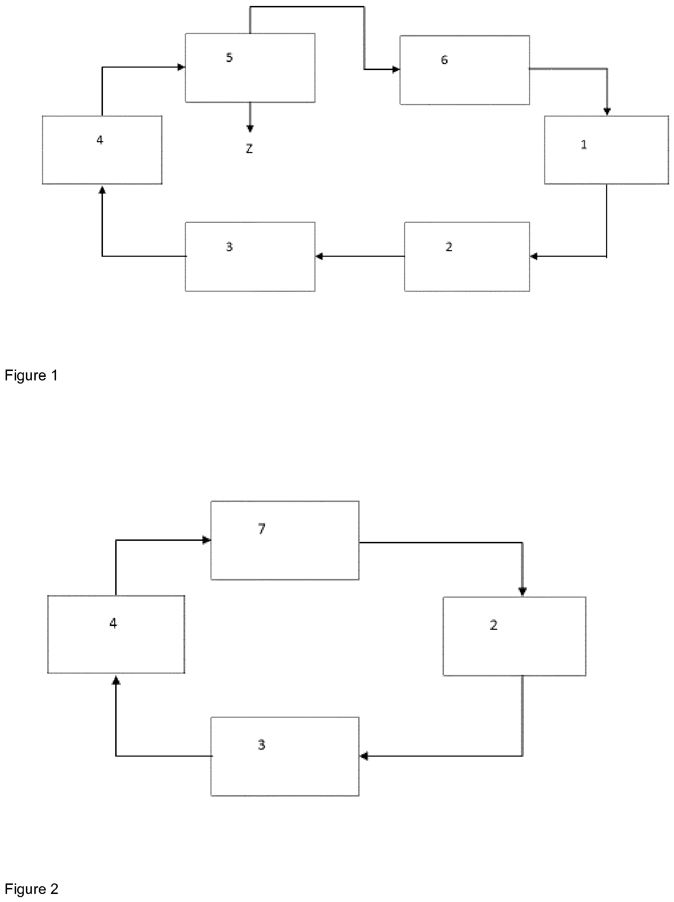

Figure 1 shows a schematic construction of a plant in which the process I is conducted. The CO₂ is retained in a reservoir vessel (1). Arranged downstream is a high-pressure pump or a compressor (2). Upstream of the autoclave (extraction vessel) (4) is a heat exchanger (3). Downstream of the autoclave, the CO2 is guided into a separation vessel (5) where the mono- and oligomers Z are collected. The gas removed from the separation vessel (5) is liquefied in a condenser (6) and fed back to the reservoir vessel (1).

Figure 2 demonstrates a plant construction for a process II. In a departure from the apparatus of process I, the separation vessel is replaced by a pressure vessel (7) into which the CO2 is guided; this apparatus contains the adsorbent. The gas is subsequently conducted to the autoclave (4) via pump (2) and heat exchanger (3). The reservoir vessel (1) is not shown in figure 2; it is outside the circuit in order to assure an isobaric mode of operation.

The processes can be performed continuously. While the polyalkenamer-containing product mixture has been extracted in a first autoclave, a second autoclave may be equipped with further product mixture. After processing the first autoclave, supercritical or gaseous CO₂, respectively, is directed to the second autoclave. The pressure in the first autoclave is relieved. This process has the advantage to use supercritical or compressed CO₂ without any additional energy input.

The CO₂ flows through the polyalkenamer-containing product mixture, for example, in a radial or axial manner. In the case of radial inflow, it has been found to be favourable when the flow direction leads from the outside inward. This gives rise to a backup, with the consequence that the CO₂ is more homogeneously distributed in the bed.

The amount of supercritical CO₂ is unrestricted. The ratio of the total weight of supercritical CO₂ based on the total weight of the polyalkenamer-containing product mixture is preferably in the range of 1:1 to 500:1, preferably in the range of 10:1 to 200:1 and more preferably in the range of 20:1 to 50:1.

The CO₂ may contain a cosolvent. Suitable cosolvents are selected from the group of the aromatic hydrocarbons such as toluene, alkanes, chlorinated alkanes, alcohols, alkanecarboxylic esters, aliphatic ketones, aliphatic ethers, water and mixtures thereof. A preferred cosolvent is hexane. It is preferred that the CO2 contains less than 10 wt.-% cosolvent, based on the mass of CO2 and cosolvent, more preferably 0.5 - 7.5 wt.-%, most preferably 1 - 6 wt.-%.

Oligomers in the context of this invention especially include the dimer, trimer and tetramer of the cycloalkene used. Polyalkenamers in the context of this invention are polymers of cycloalkenes comprising at least five cycloalkene monomer units.

It is preferable that the sum total of monomer, dimer, trimer and tetramer (impurities) in the polyalkenamer-containing composition is less than 20 000 ppm, based on the total weight of the composition. More preferably less than 10 000 ppm, even more preferably less than 3500 ppm and especially less than 1000 ppm of impurities are present.

The di-, tri-and tetramers are determined quantitatively as follows:
Sample preparation: 400 mg of sample in each case are weighed accurately into a 10 ml standard flask and about 8 ml of dichloromethane are added. With the aid of an agitator, the sample is dissolved (ideally overnight); subsequently, the standard flask is made up to the mark with dichloromethane and mixed again. 50 µl of the sample solution thus obtained are injected with a microlitre syringe into a pad of silanized glass wool within a TDS tube. The tube is left to stand in a fume hood for about 30 minutes, so that the solvent can evaporate.

External standard solution: 50 mg of hexadecane are weighed accurately into a 100 ml standard flask, made up to the mark with methanol and homogenized by shaking. 5 µl of this solution (corresponding to about 2.5 µg) are applied to a Tenax tube. This external standard is analysed once at the start and once at the end of the sequence.

The determination was effected by means of an Agilent 6890 gas chromatograph with ChemStation software; parameters: Rtx-5 separation column; length: 60 m; internal diameter: 250 µm; film thickness: 0.25 µm; carrier gas: helium; column supply pressure: 203.1 kPa; oven temperature: 50°C - 10°C/min - 320°C (33 min); split: 50:1; detector temperature: 280°C (Thermal Aux)). The thermal desorption unit has been set up as follows: Gerstel TDSA; TDS oven (initial temperature: 20°C; equilibration time: 1 min; initial time: 0.5 min; heating rate: 60°C/min; end temperature: 280°C; hold time: 10 min); cold application system (initial temperature: -150°C (with liquid N₂ cooling); equilibration time: 1 min; initial time: 0.5 min; heating rate: 10°C/s; end temperature: 300°C; hold time: 5 min). In addition, the following settings were used: transfer temperature: 300°C; desorption mode: Solvent Venting - Dry Purge; venting time: 0.5 min; sample mode: Remove Tube.

The semiquantitative evaluation was effected against the external standard hexadecane. The response factor is assumed to be 1. Only the peak groups corresponding to the oligomers are integrated. The dimers elute around 20 min, the trimers at about 28 min and the tetramers around 37 min. Whether the peaks belong to the integrated region is determined using the mass spectra, the oligomers being easily characterizable by the ion masses (e.g. m/z = 220, m/z = 330 and m/z = 440: di-, tri- and tetramer of polyoctenamer, respectively).

The monomer was determined as follows:
Sample preparation: 300 mg of sample are weighed accurately into each of 6 headspace vials, 5 ml of dodecane are added and the mixture is homogenized by agitation. Two mixtures are analysed as samples. To each of two further mixtures are added 5 µl of the spiking solution. To each of the two other mixtures are added 10 µl of the spiking solution. Spiking solution: 300 mg of cyclooctane and 40 mg of cyclooctene are weighed accurately into a 25 ml standard flask and made up to the mark with dodecane and homogenized by shaking. 5 ml of this solution are pipetted into a 25 ml standard flask and made up to the mark with dodecane and homogenized by shaking.

The determination was effected by means of an Agilent 7890 gas chromatograph with ChemStation software; parameters: separation column 1: fused silica CP-SIL 8CB; length: 50 m; internal diameter: 530 µm; film thickness: 1 µm; separation column 2: fused silica DB-WAX; length: 60 m; internal diameter: 530 µm; film thickness: 1 µm; carrier gas: nitrogen; column supply pressure: 10.15 psi; oven temperature: 50°C (4 min) - 5°C/min - 130°C - 30°C/min - 180°C (10 min); injector temperature: 160°C; detector temperature: 230°C; detector H₂ flow: 40 ml/min; detector air flow: 400 ml/min; make-up flow (N₂): 25 ml/min.; headspace sampler: TurboMatrix 40 Perkin Elmer: oven temperature: 100°C; needle temperature: 120°C; transfer temperature: 150°C; headspace pressure: 130 kPa; thermostating time: 60 min; pressure buildup time: 0.5 min; injection time: 0.16 min: needle residence time: 0.2 min; vial vent: yes. The quantitative evaluation was effected by the standard addition method on the two separation columns and over both spiking operations with a validated Excel sheet.

The conversion of the cycloalkene(s) can be conducted without solvent. Alternatively, the reaction can be conducted in at least one solvent. Suitable solvents are, for example, saturated aliphatic hydrocarbons such as hexane, heptane, octane, nonane, decane, dodecane, cyclohexane, cycloheptane or cyclooctane; aromatic hydrocarbons such as benzene, toluene, xylene or mesitylene; halogenated hydrocarbons such as chloromethane, dichloromethane, chloroform or carbon tetrachloride; ethers such as diethyl ether, tetrahydrofuran or 1,4-dioxane; ketones such as acetone or methyl ethyl ketone; esters such as ethyl acetate; and mixtures of the aforementioned solvents. More preferably, the solvent for the reaction is selected from the group consisting of aliphatic and aromatic hydrocarbons, here especially preferably hexane and toluene and especially hexane. Additionally selected with preference are tetrahydrofuran, methyl ethyl ketone, chloromethane, dichloromethane, chloroform or mixtures thereof, very particular preference being given to hexane or toluene. The content of solvents may be set, for example, to a value of 20% to 60% by weight, preferably of 40% to 60% by weight, based on the total weight of cycloalkene and solvent.

In the choice of solvents for the ring-opening metathesis reaction, it should be noted that the solvent should not deactivate the catalyst or the catalytically active species. This can be recognized by the person skilled in the art by simple experiments or by studying the literature. In the case of catalyst systems containing aluminium organyls, aromatic or aliphatic hydrocarbons bearing no heteroatoms are especially suitable.

In a further embodiment of the invention, the solvent mixture may contain a stabilizer. This can diffuse into the polyalkenamer and increase its storage stability and/or processing stability. Suitable stabilizers may be selected from the group of the sterically hindered phenols, for example 2,5-di-tert-butylhydroquinone, 2,6-di-tert-butyl-p-cresol, 4,4'-thiobis(6-tert-butylphenol), 2,2'-methylenebis(4-methyl-6-tertbutylphenol), octadecyl 3-(3',5'-di-tert-butyl-4'-hydroxyphenyl)propionate, 4,4'-thiobis-(6-tert-butylphenol), 2-tert-butyl-6-(3-tert-butyl-2-hydroxy-5-methylbenzyl)-4-methylphenyl acrylate, 2,6-di(tert-butyl)-4-methylphenol (BHT), 2,2-methylenebis(6-tert-butyl-p-cresol), from the group of the organic phosphites, for example triphenyl phosphite, tris(nonylphenyl) phosphite, the group of the organic thio compounds, for example dilauryl thiodipropionate, pentaerythritol tetrakis(3-laurylthiopropionate) and ascorbic acid and mixtures thereof.

The stabilizer may be present within a range from 5 to 7500 ppm, preferably 25 to 750 ppm, based in each case on the weight-average molecular weight of the polyalkenamer, preferably polyoctenamer. It is possible to add the stabilizer according to one of the following steps:
The stabilizer can be incorporated into the melt of the polymer, for example via compounding in an extruder. The stabilizer can either be metered in directly or added via a masterbatch. This can also occur only in the course of further processing to give a blend with a polymer and/or the production of shaped bodies, for example films. Another option is to dissolve the stabilizer in a suitable solvent and to apply it to the particles of the polyalkenamer. Subsequently, the solvent is removed, for example by a drying step, in which elevated temperature and/or reduced pressure are used. The stabilizer then remains on the surface of the particles and/or is absorbed into the particles during the drying. Another option is to apply the stabilizer to the particles as a powder coating.

It is also possible to produce a mixture in which polyalkenamer particles including a stabilizer in a relatively high concentration are present alongside polyalkenamer particles containing no stabilizer or a lower concentration of stabilizer.

In addition, the polyalkenamer composition, preferably polyoctenamer composition, may contain dyes (soluble colourants).

In a preferred embodiment of the process according to the invention, the cycloalkene is selected from the group consisting of cyclobutene, cyclopentene, cycloheptene, cyclooctene, cyclononene, cyclodecene, cyclododecene, cycloocta-1,5-diene, 1,5-dimethylcycloocta-1,5-diene, cyclodecadiene, norbornadiene, cyclododeca-1,5,9-triene, trimethylcyclododeca-1,5,9-triene, norbornene (bicyclo[2.2.1]hept-2-ene), 5-(3'-cyclohexenyl)-2-norbornene, 5-ethyl-2-norbornene, 5-vinyl-2-norbornene, 5-ethylidene-2-norbornene, dicyclopentadiene and mixtures thereof. Particular preference is given to cyclopentene, cycloheptene, cyclooctene and cyclododecene. Cyclooctene is a very particularly preferred cycloalkene because of its availability and ease of handling. It is possible to use two or more cycloalkenes, so as to form copolymers of the polyalkenamer. The cycloalkenes may be substituted by alkyl groups, aryl groups, alkoxy groups, carbonyl groups, alkoxycarbonyl groups and/or halogen atoms.

In one embodiment of the process according to the invention, a standard solvent extraction can be conducted prior to the CO₂ extraction or after the CO₂ extraction. This can further reduce the proportion of monomers and oligomers. The solvent extraction can be undertaken within a temperature range from 20°C up to the boiling range of the solvent mixture (reflux), preferably to 60°C, more preferably in the range from 30°C to 50°C and even more preferably in the range from 35°C to 45°C. However, the temperature within the ranges of values mentioned is limited by the boiling point of the solvent and the properties of the polyalkenamers. For example, the temperature should not be above the melting point of a semicrystalline polymer or the glass transition temperature of an amorphous polymer, preferably at least 5 °C below the boiling range. It is possible in principle to extract the polyalkenamer in the molten state. However, this is less preferred since the discrete particles originally present can form lumps or coalesce. This reduces the surface area of the extraction material, and the extraction rate falls. As a result, the product obtained has to be converted back to a homogeneous particulate form after the extraction, for example by granulation or grinding.

Illustrative solvents for the solvent extraction may be selected from hexane, heptane, diamyl ether, diethyl ether, butyl butyrate, ethyl amyl ketone, butyl acetate, methyl isobutyl ketone, methyl amyl ketone, amyl acetate, ethyl n-butyrate, carbon tetrachloride, diethyl carbonate, propyl acetate, diethyl ketone, dimethyl ether, toluene, ethyl acetate, tetrahydrofuran, benzene, tetrachloroethylene, chloroform, methyl ethyl ketone, chlorobenzene, dichloromethane, chloromethane, 1,1,2,2-tetrachloroethane, ethylene dichloride, acetone, 1,2-dichlorobenzene, carbon disulphide, 1,4-dioxane, cresol, aniline, pyridine, N,N-dimethylacetamide, cyclohexanol, cyclohexanone, butyl alcohol, 2-butyl alcohol, acetonitrile, dimethyl sulphoxide, N,N-dimethylformamide, furfuryl alcohol, propylene glycol, 1,2-propylene carbonate, ethanol, methanol, propanol, isopropanol, butanols, ethylene glycol, ethylene carbonate, glycerol, water or mixtures thereof. The person skilled in the art will be able to find suitable solvents or mixtures by simple preliminary experiments.

The solvent extraction can be conducted in various forms; for example, it is possible to employ the principle of Soxhlet extraction, such that the material to be extracted is contacted semi-continuously with fresh solvent. The solvent extraction can also be conducted in such a way that, for example, in a stirred tank, the volume of solvent at a particular time is exchanged completely or partially for a new volume of solvent, in which case this can be repeated several times. In addition, it is possible to conduct the solvent extraction in such a way that a solvent recycling operation is integrated, in which case the recycling may relate to one or more components of the mixture. As the case may be, it may then be necessary to meter more of one or more of the components into the recyclate in order to reestablish the original mixing ratio. In addition, the solvent extraction can also be conducted in such a way that the ratio of the components changes in the course of the solvent extraction, in which case the change may be constant or occur in jumps.

The solvent extraction is preferably conducted under inert gas.

The temperature and/or the pressure can be kept constant during the solvent extraction. It is also conceivable that temperature or pressure are varied in the course of the extraction operation.

After the solvent extraction, the polyalkenamer-containing composition can be separated from the remaining solvent, for example, by decanting it off or filtering. Alternatively or additionally, a drying operation can be conducted, for example under reduced pressure and/or at elevated temperature, in order to remove the solvent.

The polyalkenamer-containing product mixture obtained in a) may be in solid form or dissolved in solvent. Preferably, the solvent is removed. This can be undertaken by heating or reducing the pressure, for example by means of vacuum degassing. Prior to the performance of step b) (CO₂ extraction) or prior to the performance of an optional solvent extraction, the product mixture is preferably pelletized to particles, for example by strand pelletization or underwater pelletization, or pulverized, for example by spray-drying or grinding. In a preferred embodiment, the polyalkenamer-containing product mixture obtained in a) is in solid form and is pelletized or pulverized to particles prior to step b). Preferably, the mean mass of the particles is less than 100 g/1000, more preferably less than 10 g/1000 and especially preferably less than 1 g/1000. This includes mean masses up to a maximum size of 1000 g/1000. The particles preferably have a diameter of at least 0.3 mm, more preferably of at least 0.5 mm and most preferably of at least 0.8 mm.

To determine the mean mass, about 2-3 g of the particles are applied to a clean underlayer, for example a sheet of paper. Subsequently, all grains in this sample are counted and transferred to a petri dish; spikes of length > 1.0 cm or chains of pellets > 1.0 cm are excluded (discarded) and are not assessed here. The number of pellet grains is noted; it has to be min. 150. Subsequently, the pellet grains are weighed accurately to 0.1 g and expressed on the basis of 1000 pellets. If there are less than 150 pellet grains, a new, correspondingly larger particle volume has to be taken as sample.

The process according to the invention can be conducted continuously or batchwise.

The polyalkenamer, preferably polyoctenamer, preferably has a weight-average molecular weight (Mw) of 5000 g/mol to 500 000 g/mol, preferably of 10 000 g/mol to 250 000 g/mol and more preferably of 20 000 to 200 000 g/mol. The molecular weight is determined by means of Gel Permeation Chromatography (GPC) against a styrene standard. The measurement is based on DIN 55672-1.

Sample preparation: The samples are dissolved with a content of 5 g/l in tetrahydrofuran at room temperature. They are filtered prior to injection into the GPC system (0.45 µm syringe filter). The measurement is effected at room temperature.
Column combination
   1 x 5 cm, 5 µm, 100 A, (styrene-divinylbenzene copolymer)
   1 x 30 cm, 5 µm, 50 A, (styrene-divinylbenzene copolymer)
   1 x 30 cm, 5 µm, 1000 A, (styrene-divinylbenzene copolymer)
   1 x 30 cm, 5 µm, 100 000 A, (styrene-divinylbenzene copolymer)
Mobile phase: ultrapure tetrahydrofuran, stabilized
Flow rate: 1 ml/min
Detection: refractive index detector
Calibration: polystyrene

The desired molar mass can be established, for example, in the presence of at least one chain transfer agent, which allows the chain buildup to be stopped. Suitable chain transfer agents are, for example, acyclic alkenes having one or more non-conjugated double bonds which may be in terminal or internal positions and which preferably do not bear any substituents. Such compounds are, for example, pent-1-ene, hex-1-ene, hept-1-ene, oct-1-ene or pent-2-ene. In addition, it is possible to use cyclic compounds having a double bond in the side chain thereof, for example vinylcyclohexene.

The cis/trans ratio of the cycloalkenamers can be adjusted by methods familiar to the person skilled in the art. For example, the ratio is dependent on catalysts, solvents, stirring intensity or temperature or reaction time. Preferably, the trans content is at least 55%. The cis/trans ratio is determined by means of ¹H NMR in deuterochloroform.

The conversion of the cycloalkene can be effected in the presence of at least one catalyst. Suitable catalysts are, for example, transition metal halides which, together with an organometallic compound as cocatalyst, form the species which is catalytically active for the polymerization. The metal in the organometallic compound differs here from the transition metal in the halide. Alternatively, it is possible to use transition metal-carbene complexes. Useful transition metals include metals of groups 4 to 8, for example molybdenum, tungsten, vanadium, titanium or ruthenium. Metals in the organometallic compound are, for example, aluminium, lithium, tin, sodium, magnesium or zinc. Suitable catalysts and the amounts thereof to be used are detailed, for example, in EP-A-2017308.

Preference is given to using a catalyst system containing at least one alkylaluminium chloride, tungsten hexachloride or mixtures. Suitable alkylaluminium chlorides are ethylaluminium dichloride (EtAlCl₂) and ethylaluminium sesquichloride, which may also be used in mixtures. A preferred catalyst system contains tungsten hexachloride and ethylaluminium dichloride or, in a particularly preferred embodiment, consists of these two compounds. The mass ratio of the aluminium chlorides to tungsten hexachloride is preferably one to six. Particular preference is given to a ratio of two to five. To activate the catalyst, acidic compounds such as alcohols can be used.

The tungsten hexachloride can be used within a range from 0.1 to 0.04 mol%, more preferably from 0.1 to 0.01 mol%, based on the cycloalkene used. The alkylaluminium chlorides are preferably within a range from 0.2 to 0.08 mol%, more preferably 0.2 to 0.02 mol%, based on cycloalkene.

The conversion of the cycloalkenes can be conducted either isothermally or adiabatically. The temperature is preferably within a range between -20 and 120°C. This is dependent particularly on the monomers used and any solvent present. A particularly preferred temperature is in the range from 10 to 60°C. The reaction preferably takes place in a protective gas atmosphere. In the case of an adiabatic process regime, the temperature can be determined via parameters such as amount of catalyst, rate of catalyst addition, time of termination of the reaction, etc. The preferred temperature range here is 20 to 50°C.

On attainment of the desired reaction time, the polymerization can be ended by inactivation of the catalyst system. For this purpose, for example, it is possible to add a suitable amount of CH-acidic compound. Suitable examples for this purpose are alcohols such as methanol, ethanol, propanol, etc., or else carboxylic acids such as acetic acid.

The polyalkenamer-containing composition obtained by the process according to the invention can be used in packaging materials, wherein the packaging materials are preferably used for food and drink.

### Examples

### A. Polymer

Vestenamer^{®} 8012 (Polyoctenamer) of Evonik, Germany was used as the polyalkenamer-containing product mixture (average dimension of the granules is about 3 mm x 3 mm x 4 mm). Before extraction, it was refined by a re-granulation process. Vestenamer^{®} 8012 was fed into a twin screw extruder Werner&Pfleiderer ZSK30 via the main hopper. The barrel temperature was 125 °C. A screw speed of 250 rpm was applied and the throughput of the polymer was chosen to be 6 kg/h. The effective melt temperature at the die was measured with a thermometer to be 186 °C. After leaving the front plate of the extruder at the die the melt strand was cooled in a water bath and after that in air. Then the polymer strand was pelletized with a pelletizer (cutter). The cutter was operated at a strand speed of 57m/min. The re-granulation process was conducted until an amount of 100 kg of polymer (average dimension of the granules is about 1 mm x 1 mm x 1 mm) was obtained.

### Determination of molecular weight

The molecular weights of the polymers were determined by gel permeation chromatography (method: cf. description).

| | **Mn in g/mol** | **Mw in g/mol** | **Mp in g/mol** | **Polydispersity** |
|---|---|---|---|---|
| Polymer | 8600 | 130700 | 92900 | 15.0 |

| | | | | |
|---|---|---|---|---|
| Mn = number average molecular weight Mw= weight average molecular weight Mp = peak molecular weight | | | | |

### Trans content of double bonds

The trans-content of double bonds of both polymers was determined by ¹H NMR in deuterochloroform (CDCl₃). The trans-content was 80% for the polymer.

### Average particle weight

The average weight of the particles is 2.1 g/1000.
(method: cf. description)

### Oligomers before extraction

| | **Dimer / mg/kg** | **Trimer / mg/kg** | **Tetramer / mg/kg** |
|---|---|---|---|
| Polymer | 4805 | 9110 | 6653 |

### B. Extraction

The autoclave of an extraction system according to figure 1 (process I) was charged with the polyoctenamer-containing composition to be worked up (extraction material; polymer). Stages b0, b1, b2 and b3 were conducted in the same plant.

In a non-inventive example #1 the polymer was extracted by steps b0 and b1 without stages b2 and b3. An inventive example #2 comprised steps b0, b1, b2 and b3. In both cases the sum of CO₂ (solvent/feed ratio) were identical.

### Stages b0 and b1

Carbon dioxide was set above the critical pressure by means of a high-pressure pump. The heat exchanger was closed manually and the extraction valve was partially open on manual mode for dissipating compression heat. The temperature was 20°C (below the critical conditions). The carbon dioxide was in the liquid state of matter and flew into the composition in the autoclave until extraction pressure (260 bar) was matched (duration: 10 minutes). From now on step b1 started and the heat exchanger was on extraction temperature (40°C), the extraction valve was working on automatically mode (set point 260 bar) and the carbon dioxide flew through the composition in the autoclave.

The process was conducted with a separator (process I). The autoclave was charged with the polyoctenamer. The CO₂ was withdrawn from a reservoir vessel and brought to the supercritical extraction pressure with a high-pressure pump. The temperature (increased by the heat exchanger) was above the critical temperature of CO₂. Subsequently, the supercritical CO₂ flew continuously through the autoclave with the extraction material in an axial manner by means of the same high-pressure pump, and the CO₂-soluble mono- or oligomers dissolved accordingly. The supercritical carbon dioxide was guided continuously through the extraction material.

The laden CO₂ was then expanded into a separator under non-supercritical conditions (pressure < 73.8 bar, temperature < 31°C). This cooled the gas down to give a wet vapour. An extract-rich liquid gas phase and a virtually extract-free gas phase were formed. For the separation, the liquid carbon dioxide was evaporated continuously at 45 bar and then brought to the separation temperature of 27°C in an isobaric manner. The substances dissolved in the liquid CO₂ separate out continuously in the vessel bottoms.

The gaseous CO₂ was drawn off continuously in unladen form from the top space of the separator, liquefied in a condenser at -12°C and 45 bar and fed back to the reservoir vessel of the high-pressure pump.

If the CO₂-soluble substances had been extracted completely (the amount of CO₂ needed for this purpose was determined empirically), the extraction was complete. The empirical determination was effected by conducting the extraction in several steps and determining the amount of oligomers obtained. The determination had ended when virtually no oligomers were obtained any longer in the separator.

### Stage b2

The autoclave containing the partial cleaned polyoctenamer was then decompressed to atmospheric pressure. The CO₂ changed its physical condition to gaseous. The gaseous state was kept for 75 minutes.

### Stages b0 and b3

Steps b0 and b3 were running equal to former step b0 and step b1. 2075 kg of CO₂ were used in each case (b1 or b3, respectively). The autoclave containing the cleaned polyoctenamer was then decompressed.

### Results of the extraction

| **#** | **Starting weight/ kg** | **Stage b2 and b3** | **S/F** | **Extraction pressure / bar** | **Extraction temperature / °C** |
|---|---|---|---|---|---|
| 1* | 83 | no | 50 | 260 | 40 |
| 2 | 83 | yes | 50 (25 b1 and 25 b3) | 260 | 40 |

| | | | | | |
|---|---|---|---|---|---|
| * non-inventive | | | | | |

### Evaluation

The oligomers were determined in a double determination according to the instructions in the description.

| **#** | **Dimer / mg/kg** | **Trimer / mg/kg** | **Tetramer / mg/kg** |
|---|---|---|---|
| Polymer** | 4805 | 9110 | 6653 |
| 1* | < 100 | < 100 | 1321 |
| 2 | < 100 | < 100 | 1087 |

| | | | |
|---|---|---|---|
| * = non inventive ** before extraction | | | |

By performing the inventive extraction method, it was possible to significantly reduce oligomers compared to the product mixture that had not been worked up with steps b2 and b3.

## Claims

1. Process for producing a polyalkenamer-containing composition, comprising the steps of:
a) converting at least one cycloalkene by ring-opening metathetic polymerization to obtain a polyalkenamer-containing product mixture, and
b) working up the product mixture to remove monomers and oligomers of the cycloalkenes to obtain the polyalkenamer-containing composition by extraction with CO₂,
**characterized in that** the extraction comprises at least the consecutive stages:
b1) an extraction with supercritical CO₂, then
b2) an extraction with gaseous CO₂, and then
b3) an extraction with supercritical CO₂.

2. Process according to Claim 1, **characterized in that** extraction in stage b2 is conducted at a temperature in the range from 0°C to 99°C and a pressure in the range from 0 bar to 73 bar, with adjustment of pressure and temperature with respect to one another such that the CO₂ remains in gaseous form.

3. Process according to Claim 2, **characterized in that** the pressure is below and the temperature is above the critical value for CO₂.

4. Process according to any of the preceding claims, **characterized in that** the extraction comprises at least the consecutive stages:
b0) an extraction with liquid CO_{2,} then
b1) an extraction with supercritical CO₂, then
b2) an extraction with gaseous CO₂, then
b0) an extraction with liquid CO₂, and then
b3) an extraction with supercritical CO₂.

5. Process according to any of the preceding claims, **characterized in that** the extraction in stages b1 and b3 is conducted at a temperature in the range from 31°C to 99°C and a pressure in the range from 74 bar to 1000 bar.

6. Process according to any of the preceding claims, **characterized in that** the relative mass throughput is between 10 kg and 500 kg of CO₂ per polyalkenamer-containing product mixture.

7. Process according to any of the preceding claims, **characterized in that** a separation of the CO₂ extractant from monomers and oligomers is effected after step b3.

8. Process according to Claim 7, **characterized in that** the CO₂ for separation is gaseous.

9. Process according to Claim 7, **characterized in that** the CO₂ for separation is supercritical and an adsorbent takes up the monomers and oligomers.

10. Process according to Claim 9, **characterized in that** the adsorbent is selected from activated carbon, alumina, silica and mixtures.

11. Process according to any of the preceding claims, **characterized in that** the cycloalkene is selected from the group consisting of cyclobutene, cyclopentene, cycloheptene, cyclooctene, cyclononene, cyclodecene, cyclododecene, cycloocta-1,5-diene, 1,5-dimethylcycloocta-1,5-diene, cyclodecadiene, norbornadiene, cyclododeca-1,5,9-triene, trimethylcyclododeca-1,5,9-triene, norbornene (bicyclo[2.2.1]hept-2-ene), 5-(3'-cyclohexenyl)-2-norbornene, 5-ethyl-2-norbornene, 5-vinyl-2-norbornene, 5-ethylidene-2-norbornene, dicyclopentadiene and mixtures thereof.

12. Process according to one or more of the preceding claims, **characterized in that** the polyalkenamer-containing product mixture obtained in a) is in solid form and is granulated or pulverized to particles prior to step b).

13. Process according to any of the preceding claims, **characterized in that** the conversion of cycloalkenes is conducted in the presence of a catalyst, preferably comprising at least one transition metal halide and an organometallic compound or comprising at least one transition metal-carbene complex.
